# EUROPÄISCHE PATENTSCHRIFT

(11) **EP 0 776 839 B1**
(45) Veröffentlichungstag und Bekanntmachung des Hinweises auf die Patenterteilung: **21.03.2001**
(21) Anmeldenummer: 96119127.7
(22) Anmeldetag: 29.11.1996
(51) Int. Cl.: B65G 43/02, G06K 19/077

(54) **Fördergurt mit eingelegten Transpondern**
Conveyor belt containing inserted transponders
Bande du convoyeur comportant des transpondeurs incorporés

(30) Priorität: 01.12.1995 DE 19544856
(43) Veröffentlichungstag der Anmeldung: 04.06.1997
(73) Patentinhaber: ContiTech Transportbandsysteme GmbH, 30165 Hannover (DE)
(72) Erfinder: Alles, Rainer, Dr., 30916 Isernhagen (DE)

(56) Entgegenhaltungen:
- DE-A- 1 940 945
- DE-A- 2 404 769
- DE-U- 29 516 467

## Beschreibung

Die Erfindung betrifft einen Fördergurt mit in Abständen zueinander in die Deckschicht und/oder Karkasse eingelegten elektrischen Transpondern, bestehend aus einem integrierten Schaltkreis und einer leitend mit dem integrierten Schaltkreis verbundenen Spule, die von einer außerhalb des Fördergurtes ortsfest angebrachten Sende-/Empfangseinrichtung über induktive Kopplung mit Energie versorgt werden und mit dieser Sende-/Empfangseinrichtung Daten austauschen.

Gurtförderanlagen mit endlos umlaufenden Fördergurten, die Hunderte von Metern lang sein können, stellen einen beträchtlichen Wert dar. Um überraschende größere Ausfälle zu vermeiden, gilt es, eine zuverlässige Überwachung sicherzustellen.

In diesem Zusammenhang wird in der noch nicht veröffentlichten Patentanmeldung mit dem deutschen Aktenzeichen 195 253 26.4 der Anmelderin vorgeschlagen, Transponder in die Deckschicht und/oder Karkasse eines Fördergurtes einzulegen, mit denen der Verschleiß von Fördergurtdeckschichten detektiert werden kann. Die Transponder sind derart angeordnet, daß sie bei Eintreten eines bestimmten Verschleißbetrages der Fördergurtdeckplatte bzw. Karkasse zerstört werden oder herausfallen, was zu einem Signalausfall des entsprechenden Transponders führt, der von einer ortsfesten Sende/Empfangseinrichtung registriert und für Steuerungszwecke des Fördergurtes ausgewertet wird.

Die Ausführungen zeigen, daß eine Schädigung des Fördergurtes durch die Transponder nur dann zuverlässig angezeigt wird, wenn ein Funktionsausfall der Transponder einzig und allein auf die Schädigung des Fördergurtes zurückzuführen ist. Es ist jedoch bekannt, daß Fördergurte im Alltagsgebrauch extrem hohen mechanischen Belastungen ausgesetzt sind, die nicht unmittelbar zu einer Schädigung des Fördergurtes führen. Die in den Fördergurt eingelegten Transponder sollten durch diese üblichen mechanischen Belastungen nicht zerstört werden, da ansonsten ein Signalausfall der Transponder herbeigeführt wird, obwohl die Deckschicht bzw. die Karkasse an der durch den ausgefallenen Transponder vorgegebenen Stelle noch nicht den entsprechenden Verschleiß aufweist. Der bisher unveröffentlichten Anmeldung der Anmelderin mit dem deutschen Aktenzeichen 195 253 26.4 ist nicht zu entnehmen, wie die Transponder vor einer nicht durch Verschleiß bedingten Zerstörung geschützt werden können.

Der Erfindung liegt die Aufgabe zugrunde, einen Fördergurt mit in Abständen zueinander in die Deckschicht und/oder Karkasse eingelegten elektrischen Transpondern vorzustellen, dessen Transponder gut vor den hohen mechanischen Belastungen im alltäglichen Gebrauch geschützt sind und die den Verschleiß der Fördergurtdeckplatte bzw. Karkasse, bzw. Längsrisse etc., zuverlässig anzeigen.

Die Aufgabe wird gemäß dem kennzeichnenden Merkmal des Anspruchs 1 dadurch gelöst, daß jeder Transponder in einem separaten flachen Körper angeordnet ist, der eine hohe Zugfestigkeit und eine hohe Biegefähigkeit aufweist und so den Transponder vor Zugbeanspruchungen und Biegebeanspruchungen schützt. Ein Funktionsausfall der Transponder ist also nur auf eine Schädigung des Fördergurtes zurückzuführen.

Die Vorteile der Erfindung sind insbesondere darin zu sehen, daß die Transponder vor hohen Zugkräften, die in dem Fördergurt auftreten, gut geschützt sind. Gleichzeitig können die Transponder den Biegebeanspruchungen, die beim Lauf des Fördergurtes über Trägerrollen etc. auftreten, nachgeben. Dadurch ist einem unerwünschten "Herausarbeiten" der einzelnen Transponder aus dem Fördergurt vorgebeugt. Ein weiterer Vorteil der Erfindung ist darin zu sehen, daß die Transponder bei gutem Schutz vor mechanischen Belastungen den Verschleiß der Fördergurtdeckplatte bzw. der Karkasse, bzw. Längsrisse etc., genau anzeigen, da die Transponder lediglich durch einen flachen Körper geschützt sind, der bereits bei geringer Schädigung des Fördergurtes auch beschädigt wird. Somit kommt es zu dem gewünschten Signalausfall des Transponders. Ebenfalls kann der flache Körper aus der abgenutzten Fördergurtdeckplatte bzw. Karkasse heraus fallen, was auch zu einem Signalausfall führt. Schließlich können die separaten flachen Körper mit den Transpondern bereits während der Herstellung des Fördergurtes wegen ihrer hohen mechanischen Belastbarkeit besonders gut in diesen eingebettet werden.

Gemäß einem Ausführungsbeispiel der Erfindung nach Anspruch 2 weist der Körper einen Schichtaufbau auf, der aus mindestens zwei Trägerschichten mit hoher Zugfestigkeit und hoher Biegefähigkeit aufgebaut ist, zwischen denen der Transponder angeordnet ist. Dieser Aufbau des Körpers ist besonders einfach und damit preiswert in der Herstellung.

Gemäß einer Weiterbildung der Erfindung nach Anspruch 3 ist der in den Körper eingebrachte Transponder zusätzlich von einer dünnen Kunststoffhülle umgeben. Hierdurch wird u. a. der Vorteil erreicht, daß der empfindliche Transponder bei der Herstellung des separaten flachen Körpers einfach gehandhabt werden kann.

Gemäß einer weiteren vorteilhaften Ausgestaltung der Erfindung nach Anspruch 4 wird der flache Körper derart ausgebildet, daß die den Transponder umgebende Kunststoffhülle nicht an den angrenzenden Schichten des Körpers haftet. Hierdurch wird eine mechanische Entkopplung zwischen dem Körper und dem in dem Körper eingelagerten Transponder erreicht, so daß bei Biegebeanspruchungen des Körpers nur geringe Biegekräfte vom Körper auf den Transponder übertragen werden.

Die Ansprüche 5 bis 9 beziehen sich auf vorteilhafte Ausgestaltungen der Trägerschichten. Diese können entweder als zugfeste biegefähige Kunststoffolien ausgebildet sein, die gegebenenfalls durch Glas- oder Kohlefasern verstärkt sind. Besonders vorteilhaft ist es auch, die Trägerschichten als Gewebelagen auszubilden, da diese wegen ihrer "Fadenstruktur" zwei voneinander unabhängige Kraftaufnahmeachsen haben. Werden die beiden Gewebelagen um einen bestimmten Winkel zueinander verdreht, entstehen sogar vier Kraftaufnahmeachsen in dem separaten flachen Körper und der Transponder ist somit besonders gut vor Zugbelastungen geschützt.

Zusammenfassend ist festzustellen, daß durch die erfindungsgemäße Einbettung der Transponder in separate flache Körper mit hoher Zugfestigkeit und hoher Biegefähigkeit der mechanische Schutz der Transponder gegenüber Alltagsbelastungen auf einfache Art und Weise beträchtlich gesteigert werden kann und eine Schädigung des Fördergurtes dennoch zuverlässig angezeigt wird.

Ausführungsbeispiele und weitere Vorteile der Erfindung werden im Zusammenhang mit den nachstehenden Figuren erläutert, darin zeigt:
- Fig. 1: eine Gurtförderanlage,
- Fig. 2: einen Fördergurt im Längsschnitt,
- Fig. 3: einen flachen Körper mit eingelegtem Transponder und daran angreifenden Kräften,
- Fig. 4: einen flachen Körper mit Transponder im Querschnitt,
- Fig. 5: einen flachen Körper mit Transponder im Querschnitt,
- Fig. 6: Trägerschichten,
- Fig. 7: einen flachen Körper mit Transponder im Querschnitt.

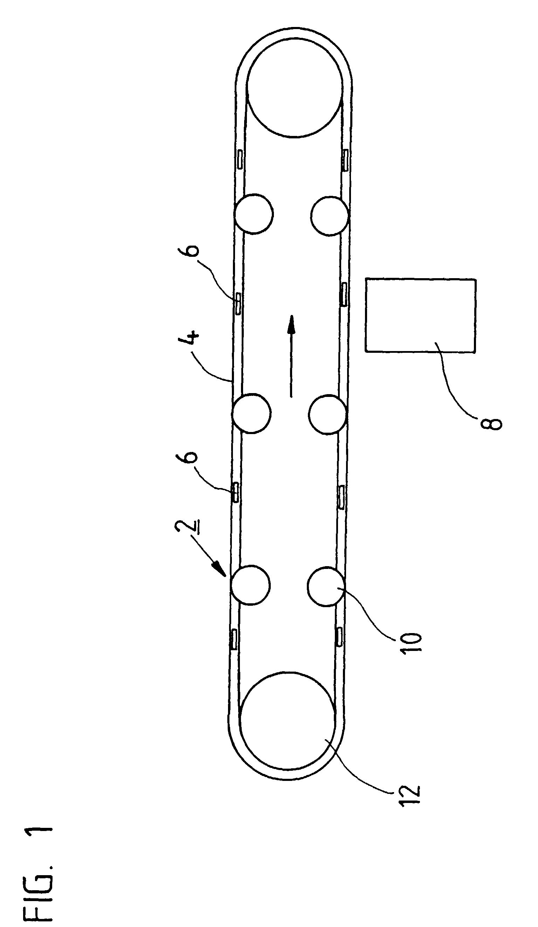

Figur 1 zeigt schematisch eine Gurtförderanlage 2, die einen Fördergurt 4 aufweist, der über die Trägerrollen 10 und Trommeln 12 endlos umläuft. In den Fördergurt 4 sind in Abständen zueinander Transponder 6 eingelegt, mit deren Hilfe der Verschleiß des Fördergurtes 4 oder Längsrisse im Fördergurt detektiert werden. Dazu senden die Transponder 6 an die außerhalb des Fördergurtes 4 angebrachte Sende- und Empfangseinrichtung 8 ein individuelles Signal aus, wenn sie an dieser vorüberlaufen. Die Sende- und Empfangseinrichtung 8 schließt aus dem Empfang des individuellen Signals, daß der entsprechende Transponder 6 funktionstüchtig ist.

Bleibt das individuelle Signal eines Transponders hingegen aus, so wird von der Sende- und Empfangseinrichtung 8 der Schluß gezogen, daß der Transponder 6 bedingt durch eine Schädigung des Fördergurtes 4 ausgefallen ist. In diesem Fall werden von der Sende- und Empfangseinrichtung 8 entsprechende Maßnahmen eingeleitet. Die Ausführungen zeigen, daß eine Schädigung des Fördergurtes 4 durch die Transponder 6 nur dann zuverlässig angezeigt werden kann, wenn ein Funktionsausfall der Transponder 6 einzig und allein auf die Schädigung des Fördergurtes 4 zurückzuführen ist.

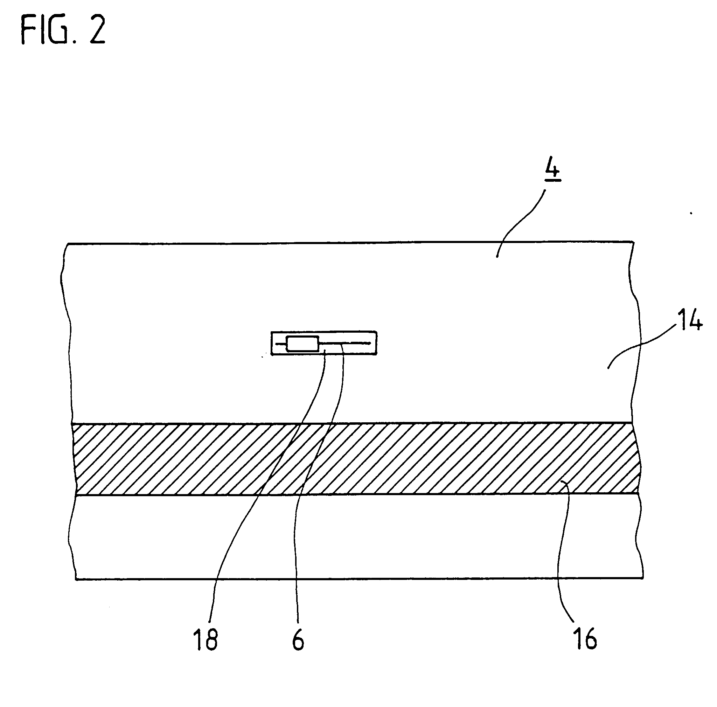

Figur 2 zeigt einen Abschnitt aus einem Fördergurt 4 im Querschnitt. Der Fördergurt 4 enthält in Abständen zueinander in die tragseitige Fördergurtdeckplatte 14 und/oder die Karkasse 16 eingelegte Transponder 6, die in einem separaten flachen Körper 18 angeordnet sind, der den Transponder 6 einerseits vor den täglichen mechanischen Belastungen schützt. Andererseits führt eine Abnutzung der Oberfläche des Fördergurtes 4 bis zu dem separaten flachen Körper 18 zuverlässig zu einer Zerstörung des Körpers 18 bzw. zu seinem Herausfallen aus dem Fördergurt 4, was zu einen Funktionsausfall des Transponders 6 und damit zu einer zuverlässigen Verschleißanzeige des Fördergurtes 4 bewirkt. Der Körper 18 kann als einschichtiger Körper (z.B. als gegossener oder spritzgegossener Körper) oder als mehrschichtiger Körper ausgebildet sein.

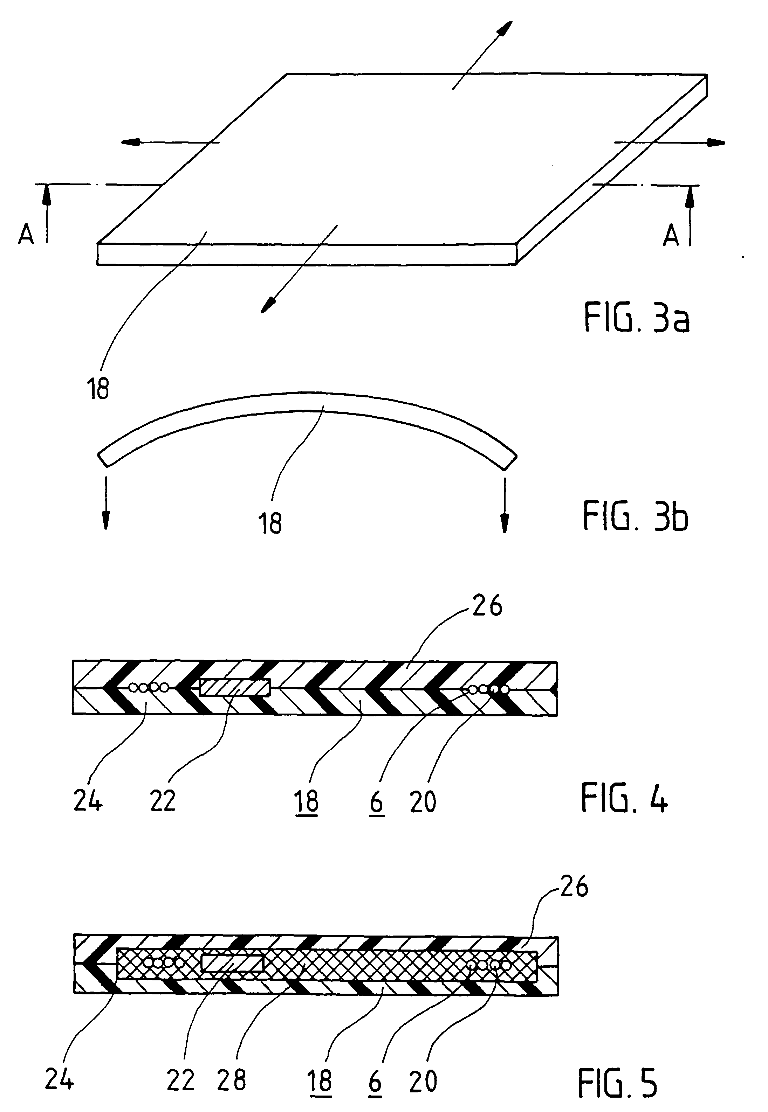

Figur 3 zeigt den separaten flachen Körper 18 mit daran angreifenden Kräften, die im täglichen Gebrauch der Gurtförderanlage 2 auftreten. Hierbei sind in Figur 3a die an den separaten flachen Körper 18 angreifenden Zugkräfte durch Pfeile angedeutet. Aufgrund der hohen Zugfestigkeit des Körpers 18 wird dieser durch die Zugkräfte nicht so stark gedehnt, daß der in dem Körper 18 angeordnete Transponder 6 zerstört wird.

Figur 3b zeigt den Körper 18 mit daran angreifenden Biegekräften, die ebenfalls durch die Pfeile angedeutet sind. Aufgrund seiner hohen Biegefähigkeit gibt der Körper 18 diesen Biegekräften nach, was zu der gezeigten Biegung führt. Dieses Nachgeben gegenüber Biegekräften führt dazu, daß sich der Körper 18 bei dem Lauf über die Trägerrollen 10 bzw. die Trommeln 12 nicht aus dem Fördergurt 4 herausarbeitet.

Es hat sich gezeigt, daß bereits Körper 18 mit einer sehr geringen Dicke von ca. 0,7 - 5,0 mm den mechanischen Beanspruchungen im Fördergurt 4 im alltäglichen Gebrauch der Gurtförderanlage 2 standhalten können. Eine derartig flache Ausbildung des Körpers 18 führt dazu, daß bereits z. B. geringer Verschleiß der Oberfläche des Fördergurtes 4 mit Hilfe des in dem Körper 18 angeordneten Transponders 6 zuverlässig angezeigt werden kann.

Figur 4 zeigt einen Querschnitt entlang der Linie A-A (siehe Fig. 3a) durch den separaten flachen Körper 18. Der Körper 18 besteht in dem gezeigten Ausführungsbeispiel aus einem Schichtaufbau, der aus mindestens zwei Trägerschichten 24 und 26 besteht, die eine hohe Zugfestigkeit und Biegefähigkeit aufweisen. Zwischen den beiden Trägerschichten 24 und 26 ist der Transponder 6, bestehend aus einer Spule 20 und einem integrierten Schaltkreis 22, der leitend mit der Spule verbunden ist, angeordnet. Die beiden Trägerschichten 24 und 26 können beispielsweise aus einer zugfesten, biegefähigen Kunststoffolie bestehen, wobei die Zugfestigkeit der Kunststoffolien durch den Zusatz von Glas- oder Kohlefasern erhöht werden kann. Es ist ebenfalls möglich, die Trägerschichten 24 und 26 als Gewebelagen auszubilden.

Fig. 5 zeigt ebenfalls einen Querschnitt entlang der Linie A-A (siehe Fig. 3a) durch einen separaten flachen Körper 18. Bei dem gezeigten Ausführungsbeispiel ist der Transponder 6 von einer Kunststoffhülle 28 umgeben, die wiederum zwischen den Trägerschichten 24 und 26 angeordnet ist. Die Trägerschichten 24 und 26 können genauso ausgebildet sein, wie es im Zusammenhang mit der Figur 4 bereits erläutert worden ist. Die Kunststoffhülle 28 und die Trägerschichten 24 und 26 können derartig aufeinander abgestimmt werden, daß sich beim Zusammenfügen des Körpers 18 die Kunststoffhülle 28 nicht mit den angrenzenden Schichten 24 und 26 miteinander verbindet. In diesem Fall ist der umhüllte Transponder 6 in dem Körper 18 "beweglich" angeordnet und somit mechanisch von den Trägerschichten 24 und 26 entkoppelt. Bei Biegebeanspruchungen des Körpers 18 im Fördergurt 4 (siehe Figur 3b) wird somit nur ein geringer Teil der Biegebelastungen von den Trägerschichten 24 und 26 auf den umhüllten Transponder 6 übertragen. Durch diese Maßnahme kann also die mechanische Belastbarkeit des Transponders nochmals gesteigert werden.

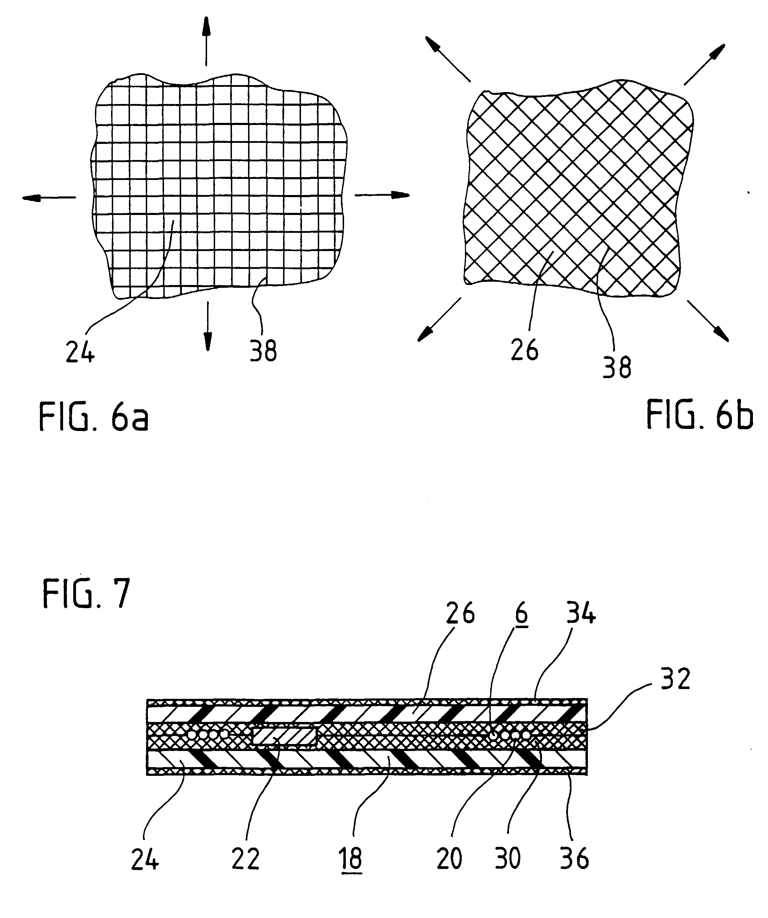

Fig. 6 zeigt jeweils einen Ausschnitt aus einer ersten Gewebelage 24 (Fig. 6a) und aus einer zweiten Gewebelage 26 (Fig. 6b). Die Gewebelagen 24 und 26 bestehen aus einzelnen Fäden, die in der Figur 6 durch die Linien 38 angedeutet sind. In Richtung der Gewebefäden 38 weisen die Gewebelagen 24 und 26 eine besonders hohe Zugfestigkeit gegenüber Zugkräften, die in der Figur 6 durch die Pfeile angedeutet sind, auf. Zwischen den Gewebelagen 24 und 26 wird, wie z. B. in Zusammenhang mit den Figuren 4 und 5 erläutert, der Transponder 6 angeordnet. Es ist besonders vorteilhaft, wenn die Gewebefäden 38 der Gewebelage 26 gegenüber den Gewebefäden 38 der Gewebelage 24 um einen bestimmten Winkel, vorzugsweise um einen Winkel von 45°, gedreht sind. In diesem Fall entstehen nämlich in dem Körper 18 zwei zusätzliche Kraftaufnahmeachsen, in deren Richtung der Körper 18 eine besonders hohe Zugfestigkeit aufweist. Der Körper 18 ist somit besonders gut vor mehrachsigen Zugbeanspruchungen geschützt. Selbstverständlich ist es möglich, mehr als zwei Gewebelagen 24 und 26 zu verwenden und die Gewebefäden 38 der verwendeten Gewebelagen jeweils um einen Winkel zu verdrehen, so daß an sich beliebig viele Kraftaufnahmeachsen in dem Körper 18 erstellt werden können.

Figur 7 zeigt nochmals einen Querschnitt entlang der Linie A-A (siehe Figur 3a) durch den Körper 18. Der Körper 18 besteht wiederum aus mindestens zwei Trägerschichten 24 und 26, die eine hohe Zugfestigkeit und eine hohe Biegefähigkeit ausweisen und zwischen denen der Transponder 6 angeordnet ist. Die Trägerschichten 24 und 26 sind jeweils ein- oder beidseitig mit einer Kontaktschicht 30, 32, 34 und 36 versehen. Diese Kontaktschichten 30, 32, 34 und 36 bestehen vorzugsweise aus einem Chloropren-Kautschuk, der mit einem Kaltkleber versehen ist und somit als Haftvermittler wirkt. Außen wird damit eine bessere Einbettung in den umgebenden elastomeren Werkstoff des Fördergurtes 4 erreicht, wohingegen die inneren Kontaktschichten 30 und 32 den Transponder 6 bei der Einbettung in den Körper 18 sicher in einer bestimmten Position fixieren.

### Bezugszeichenliste

- 2: Gurtförderanlage
- 4: Fördergurt
- 6: Transponder
- 8: ortsfest angebrachte Sende-/Empfangsstation
- 10: Trägerrollen
- 12: Trommeln
- 14: Fördergurtdeckplatte
- 16: Karkasse
- 18: Körper, in dem Transponder angeordnet ist
- 20: Spule
- 22: integrierter Schaltkreis
- 24,26: Trägerschichten
- 28: Kunststoffhülle
- 30, 32, 34, 36: Kontaktschicht
- 38: Fäden

## Patentansprüche

1. Fördergurt (4) mit in Abständen zueinander in die Deckschicht (14) und/oder Karkasse eingelegten elektrischen Transpondern (6), bestehend aus einem integrierten Schaltkreis (22) und einer leitend mit dem Schaltkreis (22) verbundenen Spule (20), die von einer außerhalb des Fördergurtes (4) ortsfest angebrachten Sende-/Empfangseinrichtung (8) über induktive Kopplung mit Energie versorgt werden und mit dieser Sende-/Empfangseinrichtung (8) Daten austauschen,
**dadurch gekennzeichnet,**
daß jeder Transponder (6) in einem separaten flachen Körper (18) angeordnet ist, der eine hohe Zugfestigkeit und eine hohe Biegefähigkeit aufweist und so den Transponder (6) vor Zugbeanspruchungen und Biegebeanspruchungen schützt.

2. Fördergurt (4) nach Anspruch 1, dadurch gekennzeichnet, daß der Körper (18) aus einem Schichtaufbau besteht, der aus mindestens zwei Trägerschichten (24, 26) mit hoher Zugfestigkeit und hoher Biegefähigkeit aufgebaut ist, zwischen denen der Transponder (6) angeordnet ist.

3. Fördergurt (4) nach einem der Ansprüche 1 bis 2, dadurch gekennzeichnet, daß der in den Körper (18) eingebrachte oder der zwischen den Trägerschichten (24, 26) eingelegte Transponder (6) von einer dünnen Kunststoffhülle (28) umgeben ist.

4. Fördergurt (4) nach Anspruch 3, dadurch gekennzeichnet, daß die Kunststoffhülle (28) nicht an dem Körper (18) bzw. an den angrenzenden Trägerschichten (24, 26) haftet, so daß bei Biegebeanspruchungen keine Kräfte von dem Körper (18) auf den Transponder (6) bzw. von den Trägerschichten (24, 26) auf den Transponder (6) übertragen werden.

5. Fördergurt (4) nach einem der Ansprüche 2 - 4, dadurch gekennzeichnet, daß die zwei Trägerschichten (24, 26) jeweils aus einer zugfesten biegefähigen Kunststoffolie (24, 26), vorzugsweise aus einem Kunststoffpolymer, bestehen.

6. Fördergurt (4) nach Anspruch 5, dadurch gekennzeichnet, daß die Kunststoffolien (24, 26) durch Glas- oder Kohlefasern verstärkt sind.

7. Fördergurt (4) nach einem der Ansprüche 2 - 4, dadurch gekennzeichnet, daß die zwei Trägerschichten (24, 26) jeweils aus einer Gewebelage (24, 26) bestehen.

8. Fördergurt (4) nach Anspruch 7, dadurch gekennzeichnet, daß eine Gewebelage (24) gegenüber der anderen Gewebelage (26) um einen Winkel, vorzugsweise um 45°, gedreht ist und somit zwei zusätzliche Kraftaufnahmeachsen im Körper (18) entstehen.

9. Fördergurt (4) nach einem der Ansprüche 2 - 8, dadurch gekennzeichnet, daß zumindest die dem Transponder (6) abgewandten Flächen der der Trägerschichten (24, 26) mit einer Kontaktschicht (34, 36) versehen sind, die einen Kaltkleber enthalten und somit eine bessere Einbettung des Körpers (18) im umgebenen Material des Fördergurtes (4) ermöglichen.

## Claims

1. Conveyor belt (4), having electrical transponders (6), which are inserted into the top layer (14) and/or carcase at spacings from one another and comprise an integrated circuit (22) and a coil (20), which is conductively connected to the circuit (22), said transponders being supplied with energy via inductive coupling by a transmitting/receiving arrangement (8), which is fixedly mounted externally of the conveyor belt (4), and exchanging data with said transmitting/receiving arrangement (8), characterised in that each transponder (6) is disposed in a separate flat body (18), which has a high level of tensile strength and a high level of flexibility and thus protects the transponder (6) from tensile stresses and bending stresses.

2. Conveyor belt (4) according to claim 1, characterised in that the body (18) is formed from a layered structure which is built-up from at least two carrier layers (24, 26) having a high level of tensile strength and a high level of flexibility, the transponder (6) being disposed between said layers.

3. Conveyor belt (4) according to one of claims 1 to 2, characterised in that the transponder (6), which is introduced into the body (18) or is inserted between the carrier layers (24, 26), is surrounded by a thin plastics material sleeve (28).

4. Conveyor belt (4) according to claim 3, characterised in that the plastics material sleeve (28) does not adhere to the body (18) or respectively to the adjacent carrier layers (24, 26), so that, in the event of bending stresses, no forces are transmitted from the body (18) to the transponder (6) or respectively from the carrier layers (24, 26) to the transponder (6).

5. Conveyor belt (4) according to one of claims 2 - 4, characterised in that the two carrier layers (24, 26) are each formed from a substantially inextensible, bendable plastics material film (24, 26), preferably from a plastics material polymer.

6. Conveyor belt (4) according to claim 5, characterised in that the plastics material films (24, 26) are reinforced by glass fibres or carbon fibres.

7. Conveyor belt (4) according to one of claims 2 - 4, characterised in that the two carrier layers (24, 26) each comprise one fabric ply (24, 26).

8. Conveyor belt (4) according to claim 7, characterised in that one fabric ply (24) is rotated relative to the other fabric ply (26) through an angle, preferably through 45°, and, in consequence, two additional force-absorbing axes are formed in the body (18).

9. Conveyor belt (4) according to one of claims 2 - 8, characterised in that at least the faces of the carrier layers (24, 26) remote from the transponder (6) are provided with a contact layer (34, 36), which contact layers contain a cold-setting adhesive and, in consequence, permit the body (18) to be embedded more satisfactorily in the surrounding material of the conveyor belt (4).

## Revendications

1. Bande convoyeuse (4) comportant des transpondeurs électriques (6) insérés à distance les uns des autres dans la couche de revêtement (14) et/ou dans la carcasse et constitués par un circuit intégré (22) et une bobine (20) reliée de façon conductrice au circuit (22), le circuit et la bobine étant alimentés par l'intermédiaire d'un couplage inductif par un dispositif d'émission/réception (8) monté fixe à l'extérieur de la bande convoyeuse (4) et échangeant des données avec ce dispositif d'émission/réception (8),
caractérisée en ce
que chaque transpondeur (6) est disposé dans un corps plat séparé (18), qui présente une résistance élevée à la traction et une grande aptitude à la flexion et protège ainsi le transpondeur (6) vis-à-vis de contraintes de traction et de contraintes de flexion.

2. Bande convoyeuse (4), selon la revendication 1, caractérisée en ce que le corps (18) est constitué par une structure à couches, qui est constituée par au moins deux couches de support (24,26) présentant une résistance élevée à la traction et une aptitude élevée à la flexion et entre lesquelles est disposé le transpondeur (6).

3. Bande convoyeuse (4) selon l'une des revendications 1 à 2, caractérisée en ce que le transpondeur (6) inséré dans le corps (18) ou le transpondeur (6) inséré entre les couches de support (24,26) est entouré par une enveloppe mince en matière plastique (28).

4. Bande convoyeuse (4) selon la revendication 3, caractérisée en ce que l'enveloppe en matière plastique (28) n'adhère pas au corps (18) ni aux couches contiguës de support (24,26) de sorte que dans le cas de contraintes de flexion, aucune force n'est transmise par le corps (18) au transpondeur (6) ou par les couches de support (24,26) au transpondeur (6).

5. Bande convoyeuse (4) selon l'une des revendications 2-4, caractérisée en ce que les deux couches de support (24,26) sont constituées chacune par une feuille de matière plastique (24,26) résistante à la flexion et apte à fléchir, formée de préférence d'une matière plastique polymère.

6. Bande convoyeuse (4) selon la revendication 5, caractérisée en ce que les feuilles de matière plastique (24,26) sont renforcées par des fibres de verre ou de carbone.

7. Bande convoyeuse (4) selon l'une des revendications 2-4, caractérisée en ce que les deux couches de support (24,26) sont constituées chacune par une nappe de tissu (24,26).

8. Bande convoyeuse (4) selon la revendication 7, caractérisée en ce qu'une nappe de tissu (24) est disposée en étant pivotée d'un certain angle, de préférence de 45°, par rapport à l'autre nappe de tissu (26) et qu'il apparaît par conséquent deux axes supplémentaires de réception de force dans le corps (18).

9. Bande convoyeuse (4) selon l'une des revendications 2-8, caractérisée en ce qu'au moins les surfaces, tournées à l'opposé du transpondeur (6), des couches de support (24,26) sont pourvues d'une couche de contact (34,36), ces couches de contact contenant un adhésif à froid et permettant par conséquent une meilleure insertion du corps (18) dans le matériau enveloppant de la bande convoyeuse (4).
